# EUROPEAN PATENT APPLICATION

(11) **EP 4 579 835 A1**
(43) Date of publication of application: **02.07.2025**
(21) Application number: 23857005.5
(22) Date of filing: 07.07.2023
(51) Int. Cl.: H01M 10/052, H01M 4/131, H01M 4/133, H01M 4/134, H01M 4/36, H01M 4/38, H01M 4/587

(54) **NONAQUEOUS ELECTROLYTE SECONDARY BATTERY**

(30) Priority: 26.08.2022 JP 2022135416
(71) Applicant: Panasonic Intellectual Property Management Co., Ltd., Kadoma-shi, Osaka 571-0057 (JP)
(72) Inventor: SAKATA, Motohiro, Kadoma-shi, Osaka 571-0057 (JP); SATO, Yosuke, Kadoma-shi, Osaka 571-0057 (JP); OTSUKA, Masato, Kadoma-shi, Osaka 571-0057 (JP)
(74) Representative: Eisenführ Speiser
(86) International application number: PCT/JP2023/025310
(87) International publication number: WO 2024/042888

(57) **Abstract**

One embodiment of the present invention provides a nonaqueous electrolyte secondary battery (10) wherein: a positive electrode (11) contains a lithium-containing transition metal composite oxide and a sulfonic acid compound that is present on the surfaces of particles of the composite oxide; and the sulfonic acid compound is represented by formula (I). With respect to a negative electrode (12) of this nonaqueous electrolyte secondary battery, the proportion of a silicon-containing material in a negative electrode active material is 50% by mass or more; and the value obtained by dividing the volume specific capacity of a negative electrode mixture layer (41) by the void fraction thereof is 48.0 mAh/cc·% or less. In the formula, A represents a group 1 element or a group 2 element; R represents a hydrocarbon group; and n is 1 or 2.

## Description

### TECHNICAL FIELD

The present disclosure relates to a non-aqueous electrolyte secondary battery.

### BACKGROUND ART

A silicon-containing material has attracted attention as a negative electrode active material having high capacity. Patent Literature 1 discloses a silicon-containing material that includes porous carbon and silicon and that is applicable for a negative electrode for a secondary battery, wherein the material has greater than or equal to 15 mass% and less than or equal to 85 mass% of silicon, greater than or equal to 0.05 cm³/g and less than or equal to 0.5 cm³/g of a nitrogen-inaccessible volume, and greater than or equal to 1.5 g/cm³ and less than or equal to 2.2 g/cm³ of a particle skeleton density. In Patent Literature 1, a true density and a pore state of the silicon-containing material are optimized to achieve a battery with high capacity, high durability, and high output.

### CITATION LIST

### PATENT LITERATURE

PATENT LITERATURE 1: Japanese Translation of PCT International Application Publication No. 2018-534720

### SUMMARY

Although the negative electrode using the silicon-containing material is effective for increasing the capacity of the battery, the silicon-containing material largely changes its volume with charge and discharge to cause a problem of durability (charge-discharge cycle characteristics). Thus, graphite is commonly used in combination at a larger amount than the silicon-containing material as a negative electrode active material in the conventional art including Patent Literature 1, and it is not easy to achieve both high capacity and high durability.

A non-aqueous electrolyte secondary battery according to the present disclosure is a non-aqueous electrolyte secondary battery comprising: a positive electrode; a negative electrode; and a non-aqueous electrolyte, wherein the positive electrode includes a lithium-containing transition metal composite oxide and a sulfonate compound present on particle surfaces of the composite oxide, the sulfonate compound is a compound represented by a formula (I), 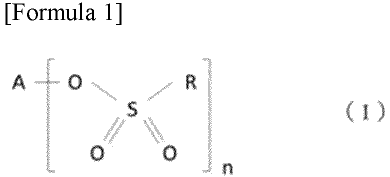 wherein A is a group I element or a group II element, R is a hydrocarbon group, and n is 1 or 2, the negative electrode has a negative electrode mixture layer including a silicon-containing material as a negative electrode active material, a proportion of the silicon-containing material in the negative electrode active material is greater than or equal to 50 mass%, and a value of a volumetric capacity of the negative electrode mixture layer divided by a void ratio is less than or equal to 48.0 mAh/cc·%.

According to the negative electrode for a secondary battery of the present disclosure, cycle characteristics may be improved in the non-aqueous electrolyte secondary battery with high capacity including the silicon-containing material.

### BRIEF DESCRIPTION OF DRAWING

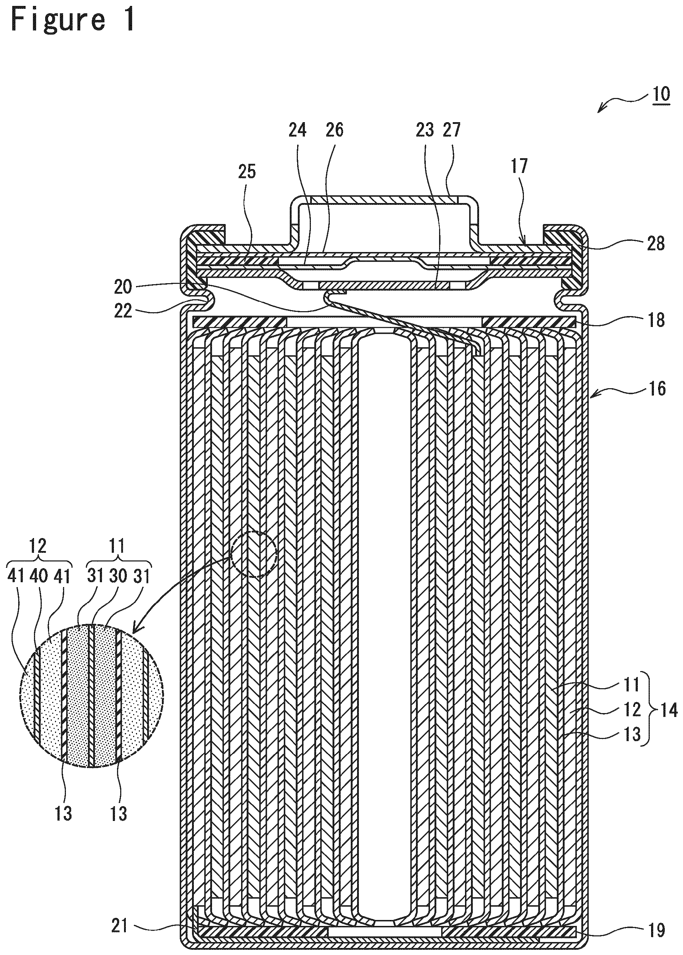

FIG. 1 is a sectional view of a non-aqueous electrolyte secondary battery of an example of an embodiment.

### DESCRIPTION OF EMBODIMENTS

The present inventors have made intensive investigation to improve the cycle characteristics of the non-aqueous electrolyte secondary battery with high capacity including a large amount of the silicon-containing material, and consequently ascertained that a relationship between a volumetric capacity and a void ratio of the negative electrode mixture layer including the silicon-containing material is important for improving the cycle characteristics. A negative electrode in which a proportion of the silicon-containing material in the negative electrode active material is greater than or equal to 50 mass% typically has large decrease in capacity with charge and discharge. However, it has been found that controlling a value of a volumetric capacity of the negative electrode mixture layer divided by a void ratio (volumetric capacity / void ratio) to be less than or equal to 48.0 mAh/cc·% may highly inhibit the decrease in capacity. The void ratio in the present disclosure means a proportion of voids between particles of the negative electrode active material in the mixture layer, and voids inside the active material particles are not counted as the void ratio.

It has been considered to be difficult that the battery using the negative electrode including a large amount of the silicon-containing material is used as batteries for, for example, on-board use and power storage use from the viewpoint of the cycle characteristics. However, both high capacity and high durability can be highly achieved by introducing voids into a negative electrode mixture layer at a level largely exceeding the level of conventional art and by controlling the volumetric capacity / the void ratio to be less than or equal to 48.0 mAh/cc·%. That is, with the non-aqueous electrolyte secondary battery including a large amount of the silicon-containing material, such that a proportion of the silicon-containing material in the negative electrode active material is greater than or equal to 50 mass%, the cycle characteristics are specifically improved beyond the volumetric capacity / the void ratio of 48.0 mAh/cc·%. When the volumetric capacity / the void ratio of the negative electrode mixture layer is less than or equal to 48.0 mAh/cc·%, it is presumed that a movement path of cations in the negative electrode is sufficiently achieved to inhibit unevenness of the battery reactions, resulting in remarkable improvement of the cycle characteristics.

Further, it has been revealed that the non-aqueous electrolyte secondary battery having higher capacity and excellent initial charge-discharge efficiency can be achieved by presence of the sulfonate compound represented by the above formula (I) on particle surfaces of a lithium-containing transition metal composite oxide used as a positive electrode active material. This is presumably because reaction resistance of the positive electrode is reduced by a function of the sulfonate compound to enable to increase charge-discharge depth. Meanwhile, the increase in the charge-discharge depth by reducing the reaction resistance causes concern about deterioration of the cycle characteristics. The initial charge-discharge efficiency and the cycle characteristics can be improved while keeping the high capacity by using the lithium-containing transition metal composite oxide having the specific sulfonate compound adhering to the particle surfaces as the positive electrode active material and by setting the volumetric capacity / the void ratio of the negative electrode mixture layer to be less than or equal to 48.0 mAh/cc·%.

Hereinafter, an example of embodiments of the non-aqueous electrolyte secondary battery according to the present disclosure will be described in detail with reference to the drawings. The scope of the present disclosure includes configurations composed of selective combinations of constitutional elements of a plurality of embodiments and modified examples described below.

Hereinafter, a cylindrical battery in which a wound electrode assembly 14 is housed in a bottomed cylindrical exterior housing can 16 will be exemplified as the non-aqueous electrolyte secondary battery, but the exterior of the battery is not limited to the cylindrical exterior housing can. The non-aqueous electrolyte secondary battery according to the present disclosure may be, for example, a rectangular battery comprising a rectangular exterior housing can, a coin battery comprising a coin-shaped exterior housing can, or a pouch battery comprising an exterior constituted with laminated sheets including a metal layer and a resin layer. The electrode assembly is not limited to a wound electrode assembly, and may be a stacked electrode assembly in which a plurality of positive electrodes and a plurality of negative electrodes are alternately stacked via a separator.

FIG. 1 is a sectional view of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening on one end side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte has lithium-ion conductivity. The non-aqueous electrolyte may be a liquid electrolyte (electrolyte liquid) or may be a solid electrolyte.

The liquid electrolyte (electrolyte liquid) includes a non-aqueous solvent and an electrolyte salt dissolved in the non-aqueous solvent. For the non-aqueous solvent, esters, ethers, nitriles, amides, and a mixed solvent of two or more thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted derivative in which hydrogen of these solvents is at least partially replaced with a halogen atom such as fluorine (for example, fluoroethylene carbonate or the like). For the electrolyte salt, a lithium salt such as LiPF₆ is used, for example.

As the solid electrolyte, a solid or gel polymer electrolyte, an inorganic solid electrolyte, and the like may be used, for example. For the inorganic solid electrolyte, a known material for an all-solid lithium-ion secondary battery or the like (for example, an oxide-type solid electrolyte, a sulfide-type solid electrolyte, halogen-type solid electrolyte, and the like) may be used. The polymer electrolyte includes a lithium salt and a matrix polymer, or includes the non-aqueous solvent, the lithium salt, and a matrix polymer, for example. As the matrix polymer, a polymer material that absorbs the non-aqueous solvent to gel is used, for example. Examples of the polymer material include a fluororesin, an acrylic resin, and a polyether resin.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side surface portion thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the electrode assembly 14, specifically the positive electrode active material to constitute the positive electrode 11 and the negative electrode active material to constitute the negative electrode 12, will be described in detail.

### [Positive Electrode]

The positive electrode 11 has a positive electrode core 30 and a positive electrode mixture layer 31 provided on the positive electrode core 30. For the positive electrode core 30, a foil of a metal stable within a potential range of the positive electrode 11, such as aluminum, a film in which such a metal is disposed on a surface thereof, and the like may be used. The positive electrode mixture layer 31 includes a positive electrode active material, a conductive agent, and a binder, and is preferably provided on both surfaces of the positive electrode core 30 except for a portion where the positive electrode lead 20 is to be connected. The positive electrode 11 may be produced by, for example, applying a positive electrode mixture slurry including the positive electrode active material, the conductive agent, and the binder on the surface of the positive electrode core 30, and drying and subsequently compressing the coating film to form the positive electrode mixture layer 31 on both the surfaces of the positive electrode core 30.

Examples of the conductive agent included in the positive electrode mixture layer 31 include carbon materials such as carbon black such as acetylene black and Ketjenblack, graphite, carbon nanotube (CNT), carbon nanofiber, and graphene. Examples of the binder included in the positive electrode mixture layer 31 include fluorine-containing resins such as polytetrafluoroethylene (PTFE) and polyvinylidene fluoride (PVDF), polyacrylonitrile (PAN), a polyimide, an acrylic resin, and a polyolefin. These resins may be used in combination with carboxymethylcellulose (CMC) or a salt thereof, polyethylene oxide, and the like. Content rates of the conductive agent and the binder are each, for example, greater than or equal to 0.1 mass% and less than or equal to 5 mass% relative to the mass of the negative electrode mixture layer 31.

The positive electrode 11 includes a lithium-containing transition metal composite oxide and a sulfonate compound present on particle surfaces of the composite oxide. The lithium-containing transition metal composite oxide having the sulfonate compound adhering to the particle surfaces functions as the positive electrode active material. The sulfonate compound is a compound represented by the formula (I).

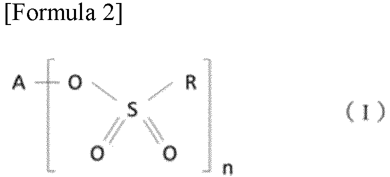

In the formula, A is a group I element or a group II element, R is a hydrocarbon group, and n is 1 or 2.

The sulfonate compound represented by the formula (I) (hereinafter, which may be simply referred to as "sulfonate compound") specifically functions to reduce the reaction resistance of the positive electrode 11 when applied for the particle surface of the lithium-containing transition metal oxide. As a result, the charge-discharge depth can be increased to achieve further increase in capacity. Although the sulfonate compound exhibits the effect at an extremely small amount, the sulfonate compound is preferably present on the particle surfaces of the composite oxide at an amount of greater than or equal to 0.01 mass% relative to the lithium-containing transition metal composite oxide. The content rate of the sulfonate compound is more preferably greater than or equal to 0.05 mass%, and particularly preferably greater than or equal to 0.10 mass% relative to the lithium-containing transition metal composite oxide.

An upper limit of the content rate of the sulfonate compound is not particularly limited, but preferably 2.0 mass%, more preferably 1.5 mass%, and particularly preferably 1.0 mass% relative to the lithium-containing transition metal composite oxide from the viewpoint of achievement of both the output characteristics and the cycle characteristics. The sulfonate compound is present at an amount of, for example, greater than or equal to 0.05 mass% and less than or equal to 1.50 mass%, or greater than or equal to 0.1 mass% and less than or equal to 1.0 mass% relative to the lithium-containing transition metal composite oxide.

The positive electrode active material mainly contains the composite particles that are the lithium-containing transition metal composite oxide having the sulfonate compound adhering to the particle surfaces, and may be constituted with substantially only the composite particles. Note that the positive electrode active material may include a composite oxide other than the composite particles, or another compound within a range not impairing the object of the present disclosure. For example, a composite oxide having no sulfonate compound adhering to the particle surfaces may be included as a part of the positive electrode active material.

The lithium-containing transition metal oxide preferably has a layered rock-salt structure. When the sulfonate compound is applied for the composite oxide with the layered rock-salt structure, the above effect becomes more remarkable. Examples of the layered rock-salt structure of the lithium-containing transition metal oxide include a layered rock-salt structure belonging to the space group R-3m and a layered rock-salt structure belonging to the space group C2/m. Among these, the layered rock-salt structure belonging to the space group R-3m is preferable from the viewpoints of increase in the capacity and stability of the crystal structure. The layered rock-salt structure of the lithium-containing transition metal oxide includes a transition metal layer, a Li layer, and an oxygen layer.

The lithium-containing transition metal oxide is a composite oxide containing metal elements such as Co, Mn, Ni, and Al in addition to Li. The metal element constituting the lithium-containing transition metal oxide is at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi, for example. Among these, at least one selected from the group consisting of Co, Ni, and Mn is preferably contained. An example of the preferable composite oxide includes a composite oxide containing Ni, Co, and Mn, or a composite oxide containing Ni, Co, and Al.

The lithium-containing transition metal oxide contains Ni at preferably greater than or equal to 50 mol%, more preferably greater than or equal to 70 mol%, and particularly preferably greater than or equal to 80 mol% relative to a total number of moles of metal elements excluding Li from the viewpoints of increase in the capacity, and the like. The effect by adding the sulfonate compound is more remarkable when the lithium-containing transition metal oxide having a higher Ni content rate is used. The content rate of Ni may be greater than or equal to 85 mol%, or may be greater than or equal to 90 mol% relative to the total number of moles of the metal elements excluding Li. An upper limit of the Ni content rate is, for example, 95 mol%.

An example of the preferable lithium-containing transition metal oxide is the composite oxide containing Ni, Co, and Al, as noted above. Relative to the total number of moles of the metal elements excluding Li, a content rate of Al is greater than or equal to 4 mol% and less than or equal to 15 mol%, and a content rate of Co is less than or equal to 1.5 mol%. The content rate of Al within the above range stabilizes the crystal structure to contribute to improvement of the cycle characteristics. Co may not be added substantially, but adding a small amount of Co improves the battery performance.

The lithium-containing transition metal oxide is, for example, a composite oxide represented by the general formula LiₐNiₓAl_{y}Co_{z}M1_{w}O_{2-b}, wherein 0.8 ≤ a ≤ 1.2, 0.50 ≤ x ≤ 0.95, 0.04 ≤ y ≤ 0.15, 0 ≤ z ≤ 0.015, 0 ≤ w ≤ 0.50, 0 ≤ b < 0.05, x+y+z+w = 1, and M1 is at least one or more elements selected from the group consisting of Mn, Fe, Ti, Si, Nb, Zr, Mo, and Zn. M1 preferably is Mn.

The content rates of the elements constituting the lithium-containing transition metal composite oxide may be measured with an inductively coupled plasma atomic emission spectrometer (ICP-AES), an electron probe micro analyzer (EPMA), an energy dispersive X-ray analyzer (EDX), and the like.

The lithium-containing transition metal composite oxide is of, for example, secondary particles each formed by aggregation of a plurality of primary particles. A volume-based median diameter (D50) of the composite oxide is not particularly limited, and an example thereof is greater than or equal to 3 µm and less than or equal to 30 µm, and preferably greater than or equal to 5 µm and less than or equal to 25 µm. When the composite oxide is of the secondary particles each formed by aggregation of the primary particles, the D50 of the composite oxide means D50 of the secondary particles. The D50 means a particle diameter at which a cumulative frequency is 50% from a smaller particle diameter side in volume-based particle size distribution. The particle size distribution of the composite oxide (the same applies to a case of the negative electrode active material) may be measured by using a laser diffraction-type particle size distribution measuring device (for example, MT3000II, manufactured by MicrotracBEL Corp.) with water as a dispersion medium.

An average particle diameter of the primary particles constituting the lithium-containing transition metal composite oxide is, for example, greater than or equal to 0.05 µm and less than or equal to 1 µm. The average particle diameter of the primary particles is calculated by averaging diameters of circumscribed circles in the primary particles extracted by analyzing a scanning electron microscope (SEM) image of a cross section of the secondary particles.

The sulfonate compound present on the particle surfaces of the lithium-containing transition metal composite oxide is the compound represented by the formula (I), as noted above.

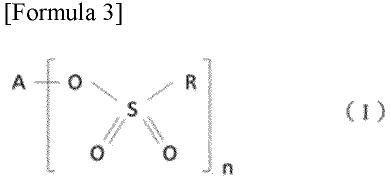

In the formula, A is a group I element or a group II element, R is a hydrocarbon group, and n is 1 or 2. A preferably is a group I element. Among these, Li or Na is more preferable, and Li is particularly preferable.

In the formula (I), R preferably is an alkyl group. The number of carbon atoms in the alkyl group is preferably less than or equal to 5, and more preferably less than or equal to 3. From the viewpoints of reduction in the reaction resistance and the like, a preferable example of R is an alkyl group having less than or equal to 3 carbon atoms, and specifically preferably a methyl group. In R, some of hydrogen bonded to carbon may be replaced with fluorine. In the formula (I), n preferably is 1.

Specific examples of the sulfonate compound include lithium methanesulfonate, lithium ethanesulfonate, lithium propanesulfonate, sodium methanesulfonate, sodium ethanesulfonate, magnesium methanesulfonate, and lithium fluoromethanesulfonate. Among these, at least one selected from the group consisting of lithium methanesulfonate, lithium ethanesulfonate, and sodium methanesulfonate are preferable, and lithium methanesulfonate is particularly preferable.

The sulfonate compound is uniformly present on the entire particle surfaces of the lithium-containing transition metal composite oxide, for example. The presence of the sulfonate compound on the particle surfaces of the composite oxide may be confirmed by Fourier transform infrared spectrometry (FT-IR). In an infrared absorption spectrum obtained by FT-IR, the positive electrode active material including lithium methanesulfonate has absorption peaks near 1238 cm⁻¹, 1175 cm⁻¹, 1065 cm⁻¹, and 785 cm⁻¹, for example. The peaks near 1238 cm⁻¹, 1175 cm⁻¹, and 1065 cm⁻¹ are peaks attributed to SO stretching vibration derived from lithium methanesulfonate. The peak near 785 cm⁻¹ is a peak attributed to CS stretching vibration derived from lithium methanesulfonate.

Also, in the positive electrode active material including a sulfonate compound other than lithium methanesulfonate, the presence of the sulfonate compound may be confirmed from absorption peaks of the infrared absorption spectrum derived from the sulfonate compound. The presence of the sulfonate compound on the particle surfaces of the lithium-containing transition metal composite oxide may also be confirmed by ICP, atomic absorption spectrometry, X-ray photoelectron spectrometry (XPS), synchrotron XRD measurement, TOF-SIMS, or the like.

The positive electrode active material, which is an example of an embodiment, may be manufactured by the following method. The manufacturing method described here is an example, and the method for manufacturing the positive electrode active material is not limited to this method.

First, a metal oxide containing a metal element such as Ni, Al, Co, and Mn is synthesized. Then, this metal oxide and a lithium compound are mixed and calcined to obtain the lithium-containing transition metal composite oxide. The metal oxide may be synthesized by, for example, while stirring a solution of metal salts including Ni, Al, Co, and Mn, adding a solution of an alkali such as sodium hydroxide dropwise to adjust a pH on the alkaline side (for example, greater than or equal to 8.5 and less than or equal to 12.5) to precipitate (coprecipitate) a composite hydroxide including the metal elements such as Ni, Al, Co, and Mn, and thermally treating this composite hydroxide. The thermal treatment temperature is not particularly limited, and may be greater than or equal to 300°C and less than or equal to 600°C as an example.

Examples of the lithium compound include Li₂CO₃, LiOH, Li₂O₂, Li₂O, LiNO₃, LiNO₂, Li₂SO₄, LiOH·H₂O, LiH, and LiF. The metal oxide and the lithium compound are mixed so that a mole ratio between the metal elements in the metal oxide and Li in the lithium compound is, for example, greater than or equal to 1:0.98 and less than or equal to 1:1.1. When the metal oxide and the lithium compound are mixed, another metal raw material may be added as necessary.

The mixture of the metal oxide and the lithium compound is calcined under an oxygen atmosphere, for example. The mixture may be calcined via a plurality of temperature-raising processes. The calcining step includes, for example: a first temperature-raising step of raising a temperature at a temperature-raising rate of greater than or equal to 1.0 °C/min and less than or equal to 5.5 °C/min to greater than or equal to 450°C and less than or equal to 680°C; and a second temperature-raising step of raising a temperature at a temperature-raising rate of greater than or equal to 0.1 °C/min and less than or equal to 3.5 °C/min to a temperature of greater than 680°C. The highest reaching temperature in the calcining step may be set at greater than or equal to 700°C and less than or equal to 850°C, and this temperature may be held for a time of greater than or equal to 1 hour and less than or equal to 10 hours.

Then, the calcined product (lithium-containing transition metal composite oxide) is washed with water and dehydrated to obtain a cake-like composition. This washing step removes the remained alkali component. The washing with water and the dehydration may be performed by conventionally known methods. Thereafter, the cake-like composition is dried to obtain a powdery composition. The drying step may be performed under a vacuum atmosphere. An example of the drying conditions is at a temperature of greater than or equal to 150°C and less than or equal to 400°C for greater than or equal to 0.5 hours and less than or equal to 15 hours.

The sulfonate compound is added into the cake-like composition obtained in the washing step or the powdery composition obtained in the drying step, for example. In this case, a sulfonic acid solution may be added instead of the sulfonate compound or together with the sulfonate compound. This yields the positive electrode active material having the sulfonate compound adhering to the particle surfaces of the lithium-containing transition metal composite oxide. The sulfonate compound may be added as an aqueous dispersion. The sulfonic acid solution is preferably an aqueous solution of a sulfonic acid. A concentration of the sulfonic acid in the sulfonic acid solution is, for example, greater than or equal to 0.5 mass% and less than or equal to 40 mass%.

Since the lithium compound remains in the cake-like composition at a certain degree, adding the sulfonic acid solution into the cake-like composition allows Li dissolved in water in the cake to react with the sulfonic acid to obtain the lithium sulfonate.

### [Negative Electrode]

The negative electrode 12 has a negative electrode core 40 and a negative electrode mixture layer 41 provided on the negative electrode core 40. For the negative electrode core 40, a foil of a metal stable within a potential range of the negative electrode 12, such as copper, a film in which such a metal is disposed on a surface thereof, and the like may be used. The negative electrode mixture layer 41 includes a negative electrode active material and a binder, and is preferably provided on both surfaces of the negative electrode core 40 except for a portion where the negative electrode lead 21 is to be connected. The negative electrode 12 may be produced by, for example, applying a negative electrode mixture slurry including the negative electrode active material and the binder on the surface of the negative electrode core 40, and drying and subsequently compressing the coating film to form the negative electrode mixture layer 41 on both the surfaces of the negative electrode core 40.

For the binder included in the negative electrode mixture layer 41, a fluororesin, PAN, a polyimide, an acrylic resin, a polyolefin, or the like may be used as in the case of the positive electrode 11, but styrene-butadiene rubber (SBR) is preferably used. The negative electrode mixture layer 41 preferably includes CMC or a salt thereof, polyacrylic acid (PAA) or a salt thereof, polyvinyl alcohol (PVA), or the like. Among these, SBR; and CMC or a salt thereof, or PAA or a salt thereof are preferably used in combination. A content rate of the binder is, for example, greater than or equal to 0.1 mass% and less than or equal to 5 mass% relative to the mass of the negative electrode mixture layer 41. The negative electrode mixture layer 41 may include a conductive agent such as CNT.

The negative electrode mixture layer 41 includes a silicon-containing material as the negative electrode active material. A proportion of the silicon-containing material in the negative electrode active material is greater than or equal to 50 mass%. Since the silicon-containing material may occlude a large amount of Li ions compared with a carbon-based active material such as graphite, which is commonly used as the negative electrode active material, increasing the content of the silicon-containing material may increase capacity of the battery. Although a detail will be described later, only simply increasing the content of the silicon-containing material considerably deteriorates the cycle characteristics. Accordingly, in the non-aqueous electrolyte secondary battery 10, a value of a volumetric capacity of the negative electrode mixture layer 41 divided by a void ratio (hereinafter, referred to as "volumetric capacity / void ratio") is set to be less than or equal to 48.0 mAh/cc·% in order to achieve both high capacity and high durability.

The proportion (content rate) of the silicon-containing material in the negative electrode active material is preferably greater than or equal to 60 mass%, more preferably greater than or equal to 70 mass%, particularly preferably greater than or equal to 80 mass%, and may be greater than or equal to 90 mass%. An upper limit of the content rate of the silicon-containing material is not particularly limited, and may be 100 mass%. An example of the preferable range of the content rate of the silicon-containing material is greater than or equal to 70 mass% and less than or equal to 100 mass%, and more preferably greater than or equal to 80 mass% and less than or equal to 100 mass% based on the mass of the negative electrode active material. The negative electrode mixture layer 41 may include substantially only the silicon-containing material as the negative electrode active material, but may include the carbon material at an amount of less than or equal to 50 mass%.

The carbon material that functions as the negative electrode active material is, for example, at least one selected from the group consisting of natural graphite, artificial graphite, soft carbon, and hard carbon. Among these, at least artificial graphite such as massive artificial graphite (MAG) or graphitized mesophase-carbon microbead (MCMB); natural graphite such as flake graphite, massive graphite, or amorphous graphite; or a mixture thereof is preferably used as the carbon material. A volume-based D50 of the carbon material is, for example, greater than or equal to 1 µm and less than or equal to 30 µm, and preferably greater than or equal to 5 µm and less than or equal to 25 µm.

The soft carbon and the hard carbon are classified as amorphous carbon in which a graphite crystal structure is not developed. More specifically, the amorphous carbon means a carbon content with a d(002) spacing by X-ray diffraction of greater than or equal to 0.342 nm. The soft carbon is also called as easily graphitized carbon, which is carbon easily graphitized by a high-temperature treatment compared with the hard carbon. The hard carbon is also called as hardly graphitized carbon. For the configuration of the present invention, the soft carbon and the hard carbon are not necessarily distinguished clearly. As the negative electrode active material, graphite; and the amorphous carbon of at least one of the soft carbon and the hard carbon may be used in combination.

As noted above, the negative electrode mixture layer 41 has a volumetric capacity / void ratio of less than or equal to 48.0 mAh/cc·%. It is considered that voids between the particles of the negative electrode active material become a main movement path of Li ions moving in the negative electrode mixture layer 41 with charge and discharge, and the value of the volumetric capacity / void ratio of the negative electrode mixture layer 41 of less than or equal to 48.0 mAh/cc·% is considered to sufficiently achieve the movement path of Li ions. In addition, it is considered that the value of less than or equal to 48.0 mAh/cc·% may sufficiently mitigate the effect of expansion of the silicon-containing material during charge. When the volumetric capacity / void ratio is less than or equal to 48.0 mAh/cc·%, decrease in capacity with charge and discharge is highly inhibited from these reasons to remarkably improve the cycle characteristics.

Since the cycle characteristics of the non-aqueous electrolyte secondary battery 10 largely vary beyond the volumetric capacity / void ratio of the negative electrode mixture layer 41 of 48.0 mAh/cc·%, the volumetric capacity / void ratio is controlled to be, for example, less than or equal to 45.0 mAh/cc·% from the viewpoints of stability of battery performance, and the like. An example of the preferable volumetric capacity / void ratio is less than or equal to 45.0 mAh/cc·%, or less than or equal to 40.0 mAh/cc·%.

A lower limit of the volumetric capacity / void ratio of the negative electrode mixture layer 41 is not particularly limited, but preferably 25.0 mAh/cc·%, and more preferably 30.0 mAh/cc·% because the effect of improving the cycle characteristics peaks with excessively reduced value thereof. When the volumetric capacity / void ratio of the negative electrode mixture layer 41 is less than or equal to 48.0 mAh/cc·% and greater than or equal to 25.0 mAh/cc·% or greater than or equal to 30.0 Ah/cc·%, both high capacity and high durability may be highly achieved.

The volumetric capacity of the negative electrode mixture layer in the present disclosure is measured by the following method.
(1) The evaluation target battery is disassembled and a negative electrode plate is cut, and a single-pole cell is produced by using metal Li as a counter electrode and an ionic liquid as an electrolyte liquid.
(2) Under a temperature environment at 25°C, the single-pole cell is charged at 0.1 C until a cell voltage reaches 5 mV, the single-pole cell is rested for 20 minutes, and then discharged at 0.1 C until the cell voltage reaches 1.0 V to determine a discharge capacity (C).
(3) The discharge capacity (C) is divided by a volume (Va) of the negative electrode mixture layer in the discharged state to calculate the volumetric capacity (Cv (mAh/cc) = C/Va).

The void ratio of the negative electrode mixture layer 41 is preferably greater than or equal to 25%, more preferably greater than or equal to 35%, or greater than or equal to 40%. As noted above, the void ratio means a proportion of voids between the negative electrode active material particles in the negative electrode mixture layer 41, and excludes voids inside the active material particles for the void ratio. The void ratio of the negative electrode mixture layer 41 is controlled so that the volumetric capacity / void ratio is a target value, and for example, varies depending on a compressing condition of the negative electrode mixture layer 41 in manufacturing the negative electrode 12. In typical, reducing the compressive force for the negative electrode mixture layer 41 increases the void ratio, and increasing the compressive force reduces the void ratio. The void ratio of the negative electrode mixture layer 41 may also be controlled by particle size distribution of the negative electrode active material and the like in addition to the above.

An upper limit of the void ratio of the negative electrode mixture layer 41 is not particularly limited, but preferably 65%, and more preferably 60% or 55% because the effect of improving the cycle characteristics peaks with excessively increased void ratio. When the void ratio of the negative electrode mixture layer 41 is greater than or equal to 25% and less than or equal to 65% or less than or equal to 60%, both high capacity and high durability may be more highly achieved.

The void ratio of the negative electrode mixture layer in the present disclosure is measured by using a mercury porosimeter.
(1) The evaluation target battery is discharged until 2.5 V, then the battery is disassembled and the negative electrode plate is cut, and a plurality of the negative electrode plates are placed into a cell for measurement of the mercury porosimeter as samples.
(2) To prevent counting gaps between the samples as the voids, a total volume (Vh) of mercury pressed in pores having a pore diameter of greater than or equal to 20 µm is determined.
(3) The total volume (Vh) of mercury is divided by a volume (Va) of the negative electrode mixture layer in the discharged state to calculate the void ratio (P (%) = Vh×100/Va).

A density of the negative electrode mixture layer 41 is preferably less than or equal to 1.5 g/cc, and more preferably less than or equal to 1.2 g/cc. In this case, the effect of improving the cycle characteristics becomes more remarkable. A lower limit of the density is preferably 0.65 g/cc from the viewpoint of achievement of both high capacity and high durability. An example of the preferable range of the density of the negative electrode mixture layer 41 is greater than or equal to 0.65 g/cc and less than or equal to 1.5 g/cc, or greater than or equal to 0.72 g/cc and less than or equal to 1.2 g/cc. The density of the negative electrode mixture layer 41 becomes lower as the void ratio becomes higher with using the same material.

The density of the negative electrode mixture layer in the present disclosure is measured by the following method.
(1) The evaluation target battery is discharged until 2.5 V, then the battery is disassembled and the negative electrode plate is cut, and immersed in DMC for washing and dried in vacuo at 100°C for 5 hours to measure a mass (Wa) of the negative electrode plate.
(2) The negative electrode mixture layer was peeled from the negative electrode plate, washed with ultrasonic wave, and then a mass (Wc) of the negative electrode core is measured.
(3) The mass (Wc) of the negative electrode core is subtracted from the mass (Wa) of the negative electrode plate to determine a mass of the negative electrode mixture layer, and the mass of the negative electrode mixture layer is divided by a volume (Va) of the negative electrode mixture layer in the discharged state to calculate the density of the negative electrode mixture layer (D (g/cc) = (Wa-Wc)/Va).

A particle expansion coefficient of the silicon-containing material is preferably less than or equal to 3.0 times. The particle expansion coefficient of the silicon-containing material is preferably less than or equal to 3.0 times from the viewpoint of improving the cycle characteristics, but an excessively small particle expansion coefficient tends to decrease the capacity. Thus, the particle expansion coefficient of the silicon-containing material is preferably greater than or equal to 1.1 times. An example of the preferable range of the particle expansion coefficient is greater than or equal to 1.1 times and less than or equal to 3.0 times, and more preferably greater than or equal to 1.3 times and less than or equal to 2.1 times. The particle expansion coefficient of the silicon-containing material within the above range easily achieves both high capacity and high durability.

The particle expansion coefficient of the silicon-containing material herein is measured by the following method.
(1) The evaluation target battery is disassembled and a negative electrode plate is cut, and a single-pole cell in a state where a particle cross section of the silicon-containing material is exposed is produced by using metal Li as a counter electrode and an ionic liquid as an electrolyte liquid.
(2) Under a temperature environment at 25°C, the single-pole cell is charged at 0.002 C until a cell voltage reaches 0.6 V, the single-pole cell is rested for 10 minutes, and then discharged at 0.05 C until the cell voltage reaches 1.9 V. The particle cross section of the silicon-containing material is observed in-situ with a SEM.
(3) From change in the particle cross-sectional area of the silicon-containing material, a particle cross-sectional area (Spc) of the silicon-containing material in the charged state and a particle cross-sectional area (Spd) of the silicon-containing material in the discharged state are determined to calculate the particle expansion coefficient (Sp = (Spc/Spd)^{1.5}).

The expansion coefficient of the negative electrode mixture layer 41 depends on the expansion coefficient and the amount of addition of the negative electrode active material. The expansion coefficient of the negative electrode mixture layer 41 is preferably less than or equal to 1.5 times. In this case, the effect of improving the cycle characteristics becomes more remarkable. A lower limit of the expansion coefficient of the negative electrode mixture layer 41 is not particularly limited, and an example thereof is 1.1 times. An example of the preferable range of the expansion coefficient of the negative electrode mixture layer 41 is greater than or equal to 1.1 times and less than or equal to 1.5 times, and more preferably greater than or equal to 1.2 times and less than or equal to 1.4 times. The expansion coefficient of the negative electrode mixture layer 41 within the above range easily achieves both high capacity and high durability.

The expansion coefficient of the negative electrode mixture layer in the present disclosure is measured by the following method.
(1) The evaluation target battery is disassembled and the negative electrode plate is cut, and a single-pole cell is produced by using metal Li as a counter electrode and an ionic liquid as an electrolyte liquid.
(2) Under a temperature environment at 25°C, the single-pole cell is charged at 0.1 C until a cell voltage reaches 5 mV, the single-pole cell is rested for 20 minutes, and then discharged at 0.1 C until the cell voltage reaches 1.0 V.
(3) A thickness (Tac) of the negative electrode mixture layer in the charged state and a thickness (Tad) of the negative electrode mixture layer in the discharged state are determined, and the expansion coefficient of the negative electrode mixture layer (Sa = Tac/Tad) is calculated as the ratio between the thicknesses.

The silicon-containing material may be any material as long as the material contains Si, and an example thereof includes a silicon alloy, a silicon compound, and a composite material containing Si. Among these, the composite material containing Si is preferable. D50 of the silicon-containing material is typically smaller than D50 of the graphite. The volume-based D50 of the silicon-containing material is, for example, greater than or equal to 1 µm and less than or equal to 20 µm, or greater than or equal to 1 µm and less than or equal to 15 µm. The silicon-containing material may be used singly, or may be used in combination of two or more thereof.

The preferable silicon-containing material (composite material) is of composite particles including an ion-conductive phase, and Si phases dispersed in the ion-conductive phase. The ion-conductive phase is, for example, at least one selected from the group consisting of a silicate phase, a carbon phase, a silicide phase, and a silicon oxide phase. The silicide phase is a phase of a compound composed of Si and an element more electrically positive than Si, and an example thereof includes NiSi, Mg₂Si, and TiSi₂. The Si phase is formed by Si dispersed as fine particles. The ion-conductive phase is a continuous phase constituted by aggregation of particles finer than the Si phase.

An average value of sizes of the Si phases (crystallite size) is preferably greater than or equal to 1 nm and less than or equal to 200 nm, and more preferably greater than or equal to 1 nm and less than or equal to 100 nm. The average value of the sizes of the Si phases is calculated by using the formula D = kλ/Bcosθ (k=0.89, λ=0.15418, 2θ=28.4°, and B is a full width at half maximum) from a half-value width of a peak (2θ=28.4°) attributed to Si in an XRD pattern. The average size of the Si phase may be, for example, greater than or equal to 1 nm and less than or equal to 10 nm. Reducing the size of the Si **phase may** reduce the particle expansion coefficient with charge and discharge while keeping high capacity.

The composite material may have a conductive layer covering a surface of the ion-conductive phase. The conductive layer is constituted with a material having higher conductivity than the ion conductive layer, and forms a good conductive path in the negative electrode mixture layer 41. The conductive layer is, for example, a carbon coating constituted with a conductive carbon material. As the conductive carbon material, carbon black such as acetylene black and Ketjenblack, graphite, formless carbon having low crystallinity (amorphous carbon), and the like may be used. A thickness of the conductive layer is preferably greater than or equal to 1 nm and less than or equal to 200 nm, or greater than or equal to 5 nm and less than or equal to 100 nm with considering achievement of conductivity and diffusability of Li ions toward particle inside. The thickness of the conductive layer may be measured by observing a cross section of the composite material using a SEM or a transmission electron microscope (TEM).

The ion-conductive phase may include at least one selected from the group consisting of group I elements and group II elements of the periodic table. The ion-conductive layer may be a Li-doped silicon oxide phase. The ion-conductive phase may include at least one selected from the group consisting of B, Al, Zr, Nb, Ta, V, Y, Ti, P, Bi, Zn, Sn, Pb, Sb, Co, Er, F, W, and a lanthanoid.

An example of the preferable composite material containing Si is of composite particles that have a sea-island structure in which fine Si is substantially uniformly dispersed in an amorphous silicon oxide phase, and that is represented entirely by the general formula SiOₓ (0 < x ≤ 2). The main component of silicon oxide may be silicon dioxide. The silicon oxide phase may be doped with Li. A content ratio (x) of oxygen to Si is, for example, 0.5 ≤ x < 2.0, and preferably 0.8 ≤ x ≤ 1.5.

Another example of the preferable composite material containing Si includes composite particles having a sea-island structure in which fine Si is substantially uniformly dispersed in an amorphous silicate phase. A preferable silicate phase is a lithium silicate phase containing Li. The lithium silicate phase is, for example, a phase of a composite oxide represented by the general formula Li_{2z}SiO_{(2+z)} (0 < z < 2). The lithium silicate phase preferably does not include Li₄SiO₄ (Z=2). Li₄SiO₄, which is an unstable compound, reacts with water and exhibits alkalinity, and therefore may modify Si, resulting in deterioration of the charge-discharge capacity. The lithium silicate phase preferably contains Li₂SiO₃ (Z=1) or Li₂Si₂O₅ (Z=1/2) as a main component from the viewpoints of stability, productivity, Li-ion conductivity, and the like.

Another example of a preferable composite material containing Si is of composite particles having a sea-island structure in which fine Si is substantially uniformly dispersed in a carbon phase. The carbon phase is preferably an amorphous carbon phase. The carbon phase may include a crystalline phase component, but preferably includes more amorphous phase component than the crystalline phase component. The amorphous carbon phase is constituted with, for example, a carbon material having greater than 0.34 nm of an average spacing of a (002) face measured by X-ray diffraction. The composite material including the carbon phase may have a conductive layer different from the carbon phase, or may not have the conductive layer.

### [Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin, may be formed.

On an interface between the separator 13 and at least one of the positive electrode 11 and the negative electrode 12, a filler layer including an inorganic filler may be formed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13.

The non-aqueous electrolyte secondary battery 10 comprising the above configuration preferably has a charge upper-limit voltage of 4.2 V and a cut-off voltage of 2.0 V. That is, charge and discharge of the non-aqueous electrolyte secondary battery 10 is preferably controlled within a voltage range of greater than or equal to 2.0 V and less than or equal to 4.2 V. The charge and discharge is more preferably controlled within a voltage range of greater than or equal to 2.5 V and less than or equal to 4.2 V. In this case, both high capacity and high durability may be more highly achieved.

### EXAMPLES

Hereinafter, the present disclosure will be further described with Examples, but the present disclosure is not limited to these Examples.

### <Example 1>

### [Synthesis of Positive Electrode Active Material]

A composite hydroxide represented by [Ni_{0.90}Al_{0.05}Mn_{0.05}](OH)₂ obtained by a coprecipitation method was calcined at 500°C for 8 hours to obtain an oxide (Ni_{0.90}Al_{0.05}Mn_{0.05}O₂). Then, LiOH and the composite oxide were mixed so that a mole ratio between Li and a total amount of Ni, Al, and Mn was 1.03:1 to obtain a mixture. This mixture was calcined under an oxygen flow with an oxygen concentration of 95% (a flow rate of 2 mL/min per 10 cm³ and 5 L/min per kilogram of the mixture) at a temperature-raising rate of 2.0 °C/min from room temperature to 650°C, and then calcined at a temperature-raising rate of 0.5 °C/min from 650°C to 780°C to obtain a lithium-containing transition metal composite oxide.

Into the obtained lithium-containing transition metal composite oxide, water was added so that a slurry concentration was 1500 g/L, and the slurry was stirred for 15 minutes and filtered to obtain a cake-like composition. Into this cake-like composition, powdery lithium methanesulfonate was added. An amount of the added lithium methanesulfonate was 0.1 mass% relative to the total mass of the lithium-containing transition metal composite oxide. After adding lithium methanesulfonate, the mixture was dried under a vacuum atmosphere under a condition at 180°C for 2 hours to obtain a positive electrode active material. By Fourier transform infrared spectrometry (FT-IR), the presence of lithium methanesulfonate on the particle surfaces of the composite oxide was confirmed.

### [Production of Positive Electrode]

The positive electrode active material, acetylene black, and polyvinylidene fluoride were mixed at a mass ratio of 98:1:1, and N-methyl-2-pyrrolidone (NMP) was used as a dispersion medium to prepare a positive electrode mixture slurry. Then, the positive electrode mixture slurry was applied on a positive electrode core composed of aluminum foil, the coating film was dried and compressed, and then the positive electrode core was cut to a predetermined electrode size to produce a positive electrode in which a positive electrode mixture layer was formed on both surfaces of the positive electrode core. At a part of the positive electrode, an exposed portion where the surface of the positive electrode core was exposed was provided.

### [Production of Negative Electrode]

Used as a silicon-containing material was composite particles having a sea-island structure in which fine Si was substantially uniformly dispersed in a carbon phase (average value of sizes of the Si phases: 5 nm, D50: 10 µm, true density: 1.5 g/cc). This silicon-containing material was used as the negative electrode active material. The negative electrode active material, sodium carboxymethylcellulose (CMC-Na), and a dispersion of styrene-butadiene rubber (SBR) were mixed at a solid-content mass ratio of 100: 1: 1, and water was used as a dispersion medium to prepare a negative electrode mixture slurry. This negative electrode mixture slurry was applied on both surfaces of a negative electrode core composed of copper foil, the coating film was dried, then the coating film was compressed by using a roller, and cut to a predetermined electrode size to obtain a negative electrode in which a negative electrode mixture layer was formed on both the surfaces of the negative electrode core. At a part of the negative electrode, an exposed portion where the surface of the negative electrode core was exposed was provided.

### [Preparation of Non-Aqueous Electrolyte]

Into a mixed solvent in which ethylene carbonate (EC), methyl ethyl carbonate (MEC), and dimethyl carbonate (DMC) were mixed at a volume ratio (25°C) of 3:3:4, LiPF₆ was dissolved at a concentration of 1.2 mol/L to prepare a non-aqueous electrolyte liquid.

### [Production of Test Cell (Non-Aqueous Electrolyte Secondary Battery)]

Leads were respectively attached to the positive electrode and the negative electrode, and the positive electrode and the negative electrode were spirally wound via a separator to obtain a wound electrode assembly. This electrode assembly was housed in a bottomed cylindrical exterior housing can. The negative electrode lead was welded to a bottom inner face of the exterior housing can, and the positive electrode lead was welded to an internal terminal plate of a sealing assembly. Thereafter, the above non-aqueous electrolyte liquid was injected into the exterior housing can, and an edge of an opening of the exterior housing can was fixed and caulked with the sealing assembly to produce a cylindrical test cell.

A particle expansion coefficient of the silicon-containing material, a density of the negative electrode mixture layer, and an expansion coefficient of the negative electrode mixture layer were measured by the aforementioned methods. The particle expansion coefficient was 1.78 times, the density of the negative electrode mixture layer was 0.864 g/cc, and the expansion coefficient of the negative electrode mixture layer was 1.27 times.

The initial charge-discharge efficiency and the cycle characteristics (capacity retention rate) of the above test cell were evaluated by the following methods. Table 1 shows the evaluation results. Each of test cells of Examples and Comparative Examples described later were similarly evaluated, and Table 1 shows the evaluation results together with the physical properties of the negative electrode. In Table 1, Examples 1 to 10 are described as A1 to A10, and Comparative Examples 1 to 6 are described as B1 to B6. The capacity retention rate of each of the test cells shown in Table 1 are values relative to the capacity retention rate of the test cell of Example 1 (A1) being 100.

### [Evaluation of Initial Charge-Discharge Efficiency]

Under a temperature environment at 25°C, the test cell was charged at a constant current value of 0.5 C until a battery voltage reached 4.1 V, and then the test cell was charged at a constant voltage of 4.1 V until a current value reached 0.05 C. Thereafter, the test cell was discharged at a constant current value of 0.7 C until the battery voltage reached 2.85 V. A charge capacity and a discharge capacity in this charge and discharge were determined to calculate a proportion of the discharge capacity relative to the charge capacity (discharge capacity × 100 / charge capacity) as the initial charge-discharge efficiency.

### [Evaluation of Cycle Characteristics (Capacity Retention Rate)]

The above charge and discharge was performed with 100 cycles, and a discharge capacity at the 1st cycle and a discharge capacity at the 100th cycle were determined to calculate capacity retention rate by the following formula. Capacity retention rate(%) = (Discharge capacity at 100th cycle/Discharge capacity at 1st cycle) × 100

### <Examples 2 to 10>

Negative electrodes and non-aqueous electrolyte secondary batteries were produced and subjected to the above performance evaluations in the same manner as in Example 1 except that the compressive condition for the negative electrode mixture layer was changed so as to set the value of the volumetric capacity / void ratio of the negative electrode mixture layer to be a value shown in Table 1.

### <Comparative Examples 1 to 6>

Negative electrodes and non-aqueous electrolyte secondary batteries were produced and subjected to the above performance evaluations in the same manner as in Example 1 except that the compressive condition for the negative electrode mixture layer was changed so as to set the value of the volumetric capacity / void ratio of the negative electrode mixture layer to be a value shown in Table 1. Note that the test cells of Comparative Examples 4 to 6 exhibited considerably deteriorated capacity retention rate in the initial cycles.

**[Table 1]**

| | Negative electrode | | Evaluation | |
|---|---|---|---|---|
| | Void ratio [%] | Volumetric capacity / void ratio [mAh/cc%] | Charge-discharge efficiency [%] | Capacity retention rate |
| A1 | 49.6 | 32.5 | 87.5 | 100 |
| A2 | 48.7 | 33.3 | 87.9 | 100.2 |
| A3 | 47.8 | 34.2 | 87.8 | 99.9 |
| A4 | 47.0 | 34.9 | 87.6 | 100.0 |
| A5 | 42.8 | 39.5 | 87.3 | 99.9 |
| A6 | 42.1 | 40.4 | 87.4 | 99.8 |
| A7 | 41.6 | 41.0 | 87.6 | 98.7 |
| A8 | 38.4 | 45.4 | 87.4 | 98.9 |
| A9 | 38.2 | 45.8 | 87.4 | 98.6 |
| A10 | 36.8 | 48.0 | 87.5 | 98.7 |
| B1 | 36.5 | 48.4 | 87.3 | 95.3 |
| B2 | 35.4 | 50.3 | 87.4 | 94.1 |
| B3 | 34.5 | 51.9 | 87.6 | 92.6 |
| B4 | 30.8 | 59.8 | 87.6 | - |
| B5 | 24.3 | 78.9 | 85.1 | - |
| B6 | 23.0 | 84.2 | 85.3 | - |

As shown in Table 1, all the test cells of Examples exhibited high capacity retention rate after the cycle test compared with the test cells of Comparative Examples 1 to 6, and exhibited excellent cycle characteristics. In addition, the test cells of Examples exhibited high initial charge-discharge efficiency compared with the test cells of Comparative Examples 5 and 6. Although Examples and Comparative Examples apply lithium methanesulfonate for the positive electrode, a case of using no sulfonate compound deteriorates the charge-discharge efficiency.

From the evaluation results shown in Table 1, it is understood that the capacity retention rate specifically increases to improve the cycle characteristics when the value of the volumetric capacity / void ratio of the negative electrode mixture layer is less than or equal to 48.0 mAh/cc·%. In other words, if the value of the volumetric capacity / void ratio of the negative electrode mixture layer is greater than 48.0 mAh/cc·%, the cycle characteristics dramatically decrease. In particular, if the volumetric capacity / void ratio is greater than 70 mAh/cc·%, the charge-discharge efficiency also considerably deteriorates.

As above, in the non-aqueous electrolyte secondary battery in which the proportion of the silicon-containing material in the negative electrode active material is greater than or equal to 50 mass%, the charge-discharge efficiency can be improved to highly achieve both high capacity and high durability by applying the sulfonate compound for the positive electrode and by controlling the volumetric capacity / void ratio of the negative electrode mixture layer to be less than or equal to 48.0 mAh/cc·%.

The present disclosure will be further described with the following embodiments.

Constitution 1: A non-aqueous electrolyte secondary battery, comprising: a positive electrode; a negative electrode; and a non-aqueous electrolyte, wherein
the positive electrode includes a lithium-containing transition metal composite oxide and a sulfonate compound present on particle surfaces of the composite oxide,
the sulfonate compound is a compound represented by a formula (I), 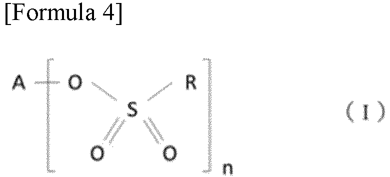
wherein A is a group I element or a group II element, R is a hydrocarbon group, and n is 1 or 2,
the negative electrode has a negative electrode mixture layer including a silicon-containing material as a negative electrode active material, a proportion of the silicon-containing material in the negative electrode active material is greater than or equal to 50 mass%, and a value of a volumetric capacity of the negative electrode mixture layer divided by a void ratio is less than or equal to 48.0 mAh/cc·%.

Constitution 2: The non-aqueous electrolyte secondary battery according to Constitution 1, wherein the sulfonate compound is present at an amount of greater than or equal to 0.1 mass% and less than or equal to 1.0 mass% relative to the lithium-containing transition metal composite oxide.

Constitution 3: The non-aqueous electrolyte secondary battery according to Constitution 1 or Constitution 2, wherein A in the formula (I) is Li or Na.

Constitution 4: The non-aqueous electrolyte secondary battery according to any one of Constitutions 1 to 3, wherein R in the formula (I) is an alkyl group having less than or equal to 3 carbon atoms.

Constitution 5: The non-aqueous electrolyte secondary battery according to any one of Constitutions 1 to 4, wherein the negative electrode mixture layer has a density of less than or equal to 1.5 g/cc.

Constitution 6: The non-aqueous electrolyte secondary battery according to any one of Constitutions 1 to 5, wherein the proportion of the silicon-containing material in the negative electrode active material is greater than or equal to 70 mass%.

Constitution 7: The non-aqueous electrolyte secondary battery according to any one of Constitutions 1 to 6, wherein the silicon-containing material has a particle expansion coefficient of less than or equal to 3.0 times.

Constitution 8: The non-aqueous electrolyte secondary battery according to any one of Constitutions 1 to 7, wherein the negative electrode mixture layer has an expansion coefficient of less than or equal to 1.5 times.

Constitution 9: The non-aqueous electrolyte secondary battery according to any one of Constitutions 1 to 8, wherein the negative electrode mixture layer includes at least one carbon material selected from the group consisting of natural graphite, artificial graphite, soft carbon, and hard carbon as the negative electrode active material.

Constitution 10: The non-aqueous electrolyte secondary battery according to any one of Constitutions 1 to 9, wherein the silicon-containing material includes an ion-conductive phase and Si phases dispersed in the ion-conductive phase, and the ion-conductive phase is at least one selected from the group consisting of a silicate phase, a carbon phase, a silicide phase, and a silicon oxide phase.

Constitution 11: The non-aqueous electrolyte secondary battery according to any one of Constitutions 1 to 10, wherein the silicon-containing material has a volume-based median diameter of greater than or equal to 1 µm and less than or equal to 20 µm, and an average value of sizes of the Si phases is greater than or equal to 1 nm and less than or equal to 200 nm.

Constitution 12: The non-aqueous electrolyte secondary battery according to any one of Constitutions 1 to 11, wherein charge and discharge is controlled within a voltage range of greater than or equal to 2.0 V and less than or equal to 4.2 V.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer

## Claims

1. A non-aqueous electrolyte secondary battery, comprising:
a positive electrode;
a negative electrode; and
a non-aqueous electrolyte, wherein
the positive electrode includes a lithium-containing transition metal composite oxide and a sulfonate compound present on particle surfaces of the composite oxide,
the sulfonate compound is a compound represented by a formula (I), 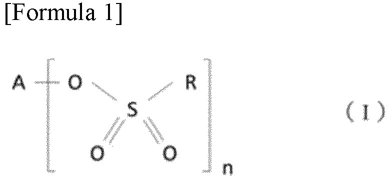
wherein A is a group I element or a group II element, R is a hydrocarbon group, and n is 1 or 2,
the negative electrode has a negative electrode mixture layer including a silicon-containing material as a negative electrode active material, a proportion of the silicon-containing material in the negative electrode active material is greater than or equal to 50 mass%, and a value of a volumetric capacity of the negative electrode mixture layer divided by a void ratio is less than or equal to 48.0 mAh/cc·%.

2. The non-aqueous electrolyte secondary battery according to claim 1, wherein the sulfonate compound is present at an amount of greater than or equal to 0.1 mass% and less than or equal to 1.0 mass% relative to the lithium-containing transition metal composite oxide.

3. The non-aqueous electrolyte secondary battery according to claim 1, wherein A in the formula (I) is Li or Na.

4. The non-aqueous electrolyte secondary battery according to claim 1, wherein R in the formula (I) is an alkyl group having less than or equal to 3 carbon atoms.

5. The non-aqueous electrolyte secondary battery according to claim 1, wherein the negative electrode mixture layer has a density of less than or equal to 1.5 g/cc.

6. The non-aqueous electrolyte secondary battery according to claim 1, wherein the proportion of the silicon-containing material in the negative electrode active material is greater than or equal to 70 mass% and less than or equal to 100 mass%.

7. The non-aqueous electrolyte secondary battery according to claim 1, wherein the silicon-containing material has a particle expansion coefficient of less than or equal to 3.0 times.

8. The non-aqueous electrolyte secondary battery according to claim 1, wherein the negative electrode mixture layer has an expansion coefficient of less than or equal to 1.5 times.

9. The non-aqueous electrolyte secondary battery according to claim 1, wherein the negative electrode mixture layer includes at least one carbon material selected from the group consisting of natural graphite, artificial graphite, soft carbon, and hard carbon as the negative electrode active material.

10. The non-aqueous electrolyte secondary battery according to claim 1, wherein
the silicon-containing material includes an ion-conductive phase and Si phases dispersed in the ion-conductive phase, and
the ion-conductive phase is at least one selected from the group consisting of a silicate phase, a carbon phase, a silicide phase, and a silicon oxide phase.

11. The non-aqueous electrolyte secondary battery according to claim 10, wherein
the silicon-containing material has a volume-based median diameter of greater than or equal to 1 µm and less than or equal to 20 µm, and
an average value of sizes of the Si phases is greater than or equal to 1 nm and less than or equal to 200 nm.

12. The non-aqueous electrolyte secondary battery according to any one of claims 1 to 11, wherein charge and discharge is controlled within a voltage range of greater than or equal to 2.0 V and less than or equal to 4.2 V.
